## Europäisches Patentamt

## European Patent Office

## Office européen des brevets

(11) Veröffentlichungsnummer: **0 215 228**
A2

# (12) EUROPÄISCHE PATENTANMELDUNG

(21) Anmeldenummer: 86109686.5

(22) Anmeldetag: 15.07.86

(51) Int. Cl.⁴: **B 23 Q 3/155**

(30) Priorität: 14.09.85 DE 3532924

(43) Veröffentlichungstag der Anmeldung: 25.03.87
Patentblatt 87/13

(84) Benannte Vertragsstaaten: AT BE CH FR GB IT LI SE

(71) Anmelder: **Gildemeister AG, Morsestrasse 1,
D-4800 Bielefeld (DE)**

(72) Erfinder: **Henneberg, Hasso, Matthiasstrasse 3,
D-3000 Hannover 1 (DE)**
Erfinder: **Kuska, Joachim, Ringstrasse 53,
D-3050 Wunstorf 1 (DE)**
Erfinder: **Schaefer, Wolfgang, Elfelweg 2,
D-3012 Langenhagen (DE)**

(54) **Werkzeugwechselvorrichtung.**

(57) Bei einer Schrägbettdrehmaschine mit zwei unabhängig verfahrbaren Werkzeugträgern soll der automatische Werkzeugwechsel mit einem zweiachsigen Werkstückhandhabungsgerät, dessen Bewegungsebene von der Verfahrebene der Werkzeugträger abweicht, ermöglicht werden. Dazu werden voneinander verschiedene Werkzeugaufnahmen der beiden Werkzeugträger in die Bewegungsebene des Werkstückhandhabungsgeräts gebracht und mit einem automatisch einwechselbaren Werkzeuggreifer in unterschiedlichen Drehlagen bereitstehende Werkzeuge in die jeweiligen Werkzeugaufnahmen eingesetzt.

0215228

Werkzeugwechselvorrichtung

Die Erfindung betrifft eine Vorrichtung zum Einwechseln von Werkzeugen in die Werkzeugaufnahmen von zwei auf unabhängig in einer zur Horizontalen geneigten Ebene verfahrbaren Kreuzschlitten einer Werkzeugmaschine angeordneten Werkzeugrevolvern, deren Werkzeugaufnahmen parallel zur Werkstückspindelachse der Werkzeugmaschine verlaufen. Eine derartige Maschine ist mit einer Werkstückhandhabungseinrichtung ausgestattet, dessen Werkstückgreifer in einer senkrechten, zur Werkstückspindelachse parallelen Ebene verfahrbar ist.

Aus DE-OS 31 18 594 ist eine Werkzeugwechselvorrichtung bekannt, die zum Wechseln der Werkzeuge eines Werkzeugrevolvers einer nicht weiter beschriebenen Werkzeugmaschine dient. Die Werkzeugwechselvorrichtung benutzt dabei eine Werkstückwechseleinrichtung, die einen in Längsrichtung der Werkzeugmaschine verfahrbaren Transportschlitten, einen auf dem Transportschlitten senkrecht verfahrbaren Schlitten und einen an dem Schlitten vorgesehenen Greifer umfaßt. Der Greifer, der für die Werkstückhandhabung vorgesehen ist, kann zusätzlich mit Greiferpaaren zum Werkzeugwechsel bestückt werden. Die Handhabungseinrichtung hat den Vorzug, daß sie nur in zwei Bewegungsrichtungen verfahrbar sein muß.

Die Veröffentlichung bezieht sich auf den Werkzeugwechsel in nur einem Revolver. Es ist nun wünschenswert bei einer Werkzeugmaschine mit zwei Werkzeugträgern, den Werkzeugwechsel an beiden Werkzeugträgern in gleicher Weise, d. h. ohne Erhöhung des Aufwandes vorzunehmen. Daher liegt der Erfindung die Aufgabe zugrunde, bei einer Werkzeugmaschine mit zwei auf unabhängig in einer zur Horizontalen geneigten Ebene verfahrbaren Werkzeugschlitten angeordneten Werkzeugrevolvern, den Werkzeugwechsel mit einer Handhabungseinrichtung zu ermöglichen, die nur in einer horizontalen und einer vertikalen Achse verfahren werden kann.

Die Aufgabe wird durch die kennzeichnenden Merkmale des Hauptanspruchs gelöst.

Die zu überwindende Schwierigkeit bestand dabei darin, daß bei auf einer geneigten Ebene angeordneten Werkzeugträgern die Werkzeugwechselpositionen sich entsprechender Werkzeugaufnahmen im Werkzeugrevolver von der Handhabungseinrichtung nicht erreicht werden können. Werkzeugaufnahmen gleichen Schaltwinkels der Werkzeugrevolver in eine gemeinsame Wechselebene zu verfahren, ist wegen der dafür erforderlichen großen Verfahrwege unmöglich und würde zu Kollisionen der Werkzeugträger führen.

Die Sicherheit des Werkzeugtransports und -wechsels wird erhöht, wenn die Werkzeuge oder Werkzeughalter Elemente aufweisen, die die unveränderliche Lage der Werkzeuge bzw Werkzeughalter gewährleisten. Ein solches Element kann die ebene Spannfläche am Werkzeughalter sein. Es können für die Beschickung beider Werkzeugrevolver die gleichen Werkzeuge genutzt werden, wenn die die Lage im Greifer bestimmenden Elemente oder Spannflächen um 90 Grad versetzt doppelt vorgesehen werden.

Eine kippstabile Lage erhalten die Werkzeuge bzw. die Werkzeughalter, wenn die Greiffinger im Querschnitt V-förmige Greifflächen und die Werkzeughalter V-förmige Gegenflächen aufweisen.

Die Kollisionsgefahr beim Einsetzen der Werkzeughalter insbesondere in den oberen Werkzeugrevolver mit benachbarten Werkzeugen wird durch einen feststehenden, gekröpften Spannfinger verringert. Naturgemäß muß die gerade Spannfläche an diesem Spannfinger angeordnet sein. Um die Reibung zu verringern, kann die Greiffläche gegnüber der senkrechten Bewegungsrichtung des Werkzeuggreifers geringfügig geneigt sein.

Um einen automatischen Ablauf des Werkzeugwechsels zu gewährleisten, werden die Werkzeuge in einem Magazin in der Lage gespeichert, in der sie im jeweiligen Werkzeugrevolver eingesetzt werden müssen. Das Werkzeugmagazin kann dabei in zwei Bereiche unterteilt sein, wobei jeder Bereich den Werkzeugen eines Revolvers zugeordnet ist. Es kann pro Werkzeugrevolver auch je ein zugehöriger Werkzeugspeicher vorgesehen sein, so daß sich die Werkzeuganzahl erhöht. Im Magazin sollten auf jeden Fall mindestens so viele Werkzeuge angeordnet werden können, wie in einem bzw. in zwei Werkzeugrevolvern aufgenommen werden können.

Die Erfindung wird nachstehend an Hand der Zeichnungen näher beschrieben. Es zeigen:

Fig. 1 eine Übersicht der Gesamtanlage

Fig. 2 eine Stirnansicht der Werkzeugrevolver mit Werkzeuggreifer

Fig. 3 eine Ansicht des Werkzeuggreifers

Fig. 4 den Schnitt IV - IV der Fig. 4

- 4 -

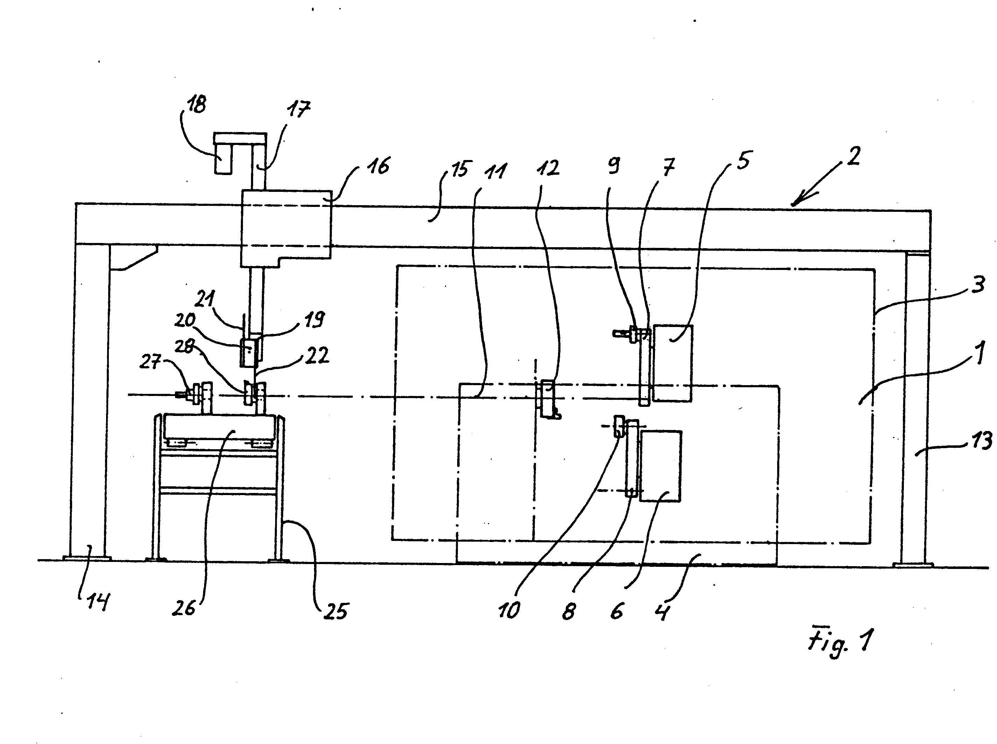

Die Übersicht der Fig. 1 zeigt eine eine Werkzeugmaschine 1 überragende Werkstückhandhabungseinrichtung 2. Von der Werkzeugmaschine 1 ist lediglich die Maschinenabdeckung 3 und das Maschinengestell 4 strichpunktiert angedeutet. Das Maschinengestell 4 trägt auf einem Schrägbett zwei Werkzeugrevolver 5,6 mit je einer Revolverscheibe 7,8, in denen Werkzeuge 9,10 aufgenommen sind. Die Revolverscheiben werden um zur Werkstückspindelachse 11 parallele Achsen geschaltet. An der nicht dargestellten Werkstückspindel ist ein Spannfutter 12 zur Aufnahme des zu bearbeitenden Werkstücks befestigt.

Die Werkstückhandhabungseinrichtung 2 besteht aus einem auf Stützen 13,14 ruhenden Querbalken 15, an dem ein Wagen 16 in Richtung der Werkstückspindelachse 11 verfahrbar gelagert ist. In dem Wagen 16 sind zwei Führungsrohre 17 gelagert, die durch einen Antriebsmotor 18 vertikal verschoben werden können. Die Führungsrohre 17 gehen an ihrem unteren Ende in den Tragarm 19 über, an dem der Greiferträger 20 drehbar befestigt ist. Es ist hier ein Doppelgreifer mit an den beiden gegenüberliegenden Seiten des Greiferträgers 20 angeordneten Werkzeuggreifern 21,22. Die Werkzeuggreifer 21,22 sind lösbar an dem Greiferträger befestigt und können automatisch gegen Werkstückgreifer oder Spannbackenpalettengreifer ausgewechselt werden.

Spindelkastenseitig neben der Werkzeugmaschine 1 ist im Verfahrbereich des Tragarms 19 ein Werkstückpalettentransportsystem 25 angeordnet, das wahlweise mit Werkstücken oder Werkzeugen 27,28 bestückte Paletten 26 schrittweise so unter den Tragarm 19 bewegt, daß die Werkstücke oder Werkzeuge 27,28 von dem am Tragarm 19 befestigten Greifer aufgenommen werden können.

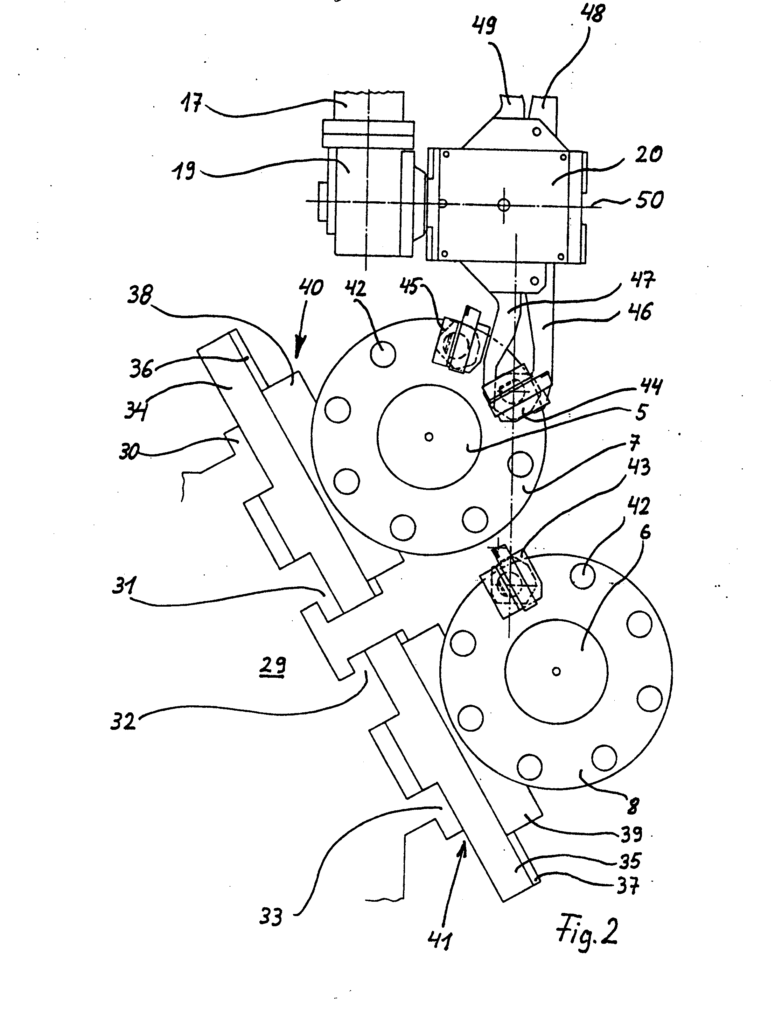

Fig. 2 zeigt die Werkzeugmaschine 1 mit Blickrichtung von der Werkstückspindel auf die Werkzeugrevolver 5,6. Das Werkzeugmaschinenbett 29 trägt vier Führungsbahnen 30,31,32,33, auf denen Bettschlitten 34,35 in Spindelachsrichtung 11 verfahrbar gelagert sind. Die Bettschlitten 34,35 tragen ihrerseits Führungsbahnen 36,37, auf denen Planschlitten 38,39 senkrecht zur Bewegungsrichtung der Bettschlitten 34,35 verschoben werden können. Planschlitten 38 und Bettschlitten 34 bilden einen Kreuzschlitten 40, der den oberen Werkzeugrevolver 5 trägt, während der untere Kreuzschlitten 41, gebildet aus dem Planschlitten 39 und dem Bettschlitten 35, den unteren Werkzeugrevolver 6 trägt. An den Werkzeugrevolvern 5,6 sind Revolverscheiben 7,8 drehbar befestigt, die Werkzeugaufnahmen 42 in Form von paralell zu den Schaltachsen der Werkzeugrevolver 5,6 verlaufenden Bohrungen aufweisen. In die Werkzeugaufnahme 42 können z.B. genormte Werkzeughalter 43,44,45 mit zylindrischem, verzahnten Werkzeughalterschaft eingesetzt werden. Die Werkzeughalter sind dazu mit gleichen Spannflächen versehen, an denen sie von den Spannfingern 46,47 bzw. 48,49 unverdrehbar gehalten werden können. Die Spannfinger 46,47 bzw.48,49 gehören zu den um eine horizontale Schaltachse 50 gegenüber dem Tragarm 19 schwenkbaren Werkzeuggreifern 21,22, die an dem Greiferträger 20 lösbar befestigt sind. Die werkzeugmaschinenseitigen Spannfinger 47,49 sind gegenüber dem Werkzeuggreifer 21,22 unbeweglich, während die gegenüberliegenden Spannfinger 46,48 die Spannbewegung als Schwenkbewegung ausführen.

Da die Werkstückhandhabungseinrichtung 2 nur in zwei Achsen linear verfahren werden kann, nämlich in einer Richtung senkrecht zur Zeichenebene der Fig.2 und in Richtung der Führungsrohre 17, muß zum Werkzeugwechsel die Mitte des in dem Werkzeuggreifer 21,22 gespannten Werkzeughalters 44 in der gleichen Ebene liegen wie die zur Übernahme bestimmten Werkzeugaufnahmen 42 der Revolverscheiben 7,8. Fig. 2 läßt deutlich erkennen, daß in diesen Werkzeugaufnahmen 42 anzuordnende Werkzeuge unterschiedliche Schneidenlagen haben. Das Einsetzen von Werkzeugen in Aufnahmebohrungen 42 der beiden Revolverscheiben 7,8 mit gleicher Schneidenlage ist nicht möglich, weil die Planschlitten 38,39 aus Kollisionsgründen eine derartige Wechselposition nicht anfahren können. Ein derartiger Wechsel wäre nur mit einem Flächenportal möglich, dessen dritte zu steuernde Verfahrachse die Anlage erheblich verteuern würde.

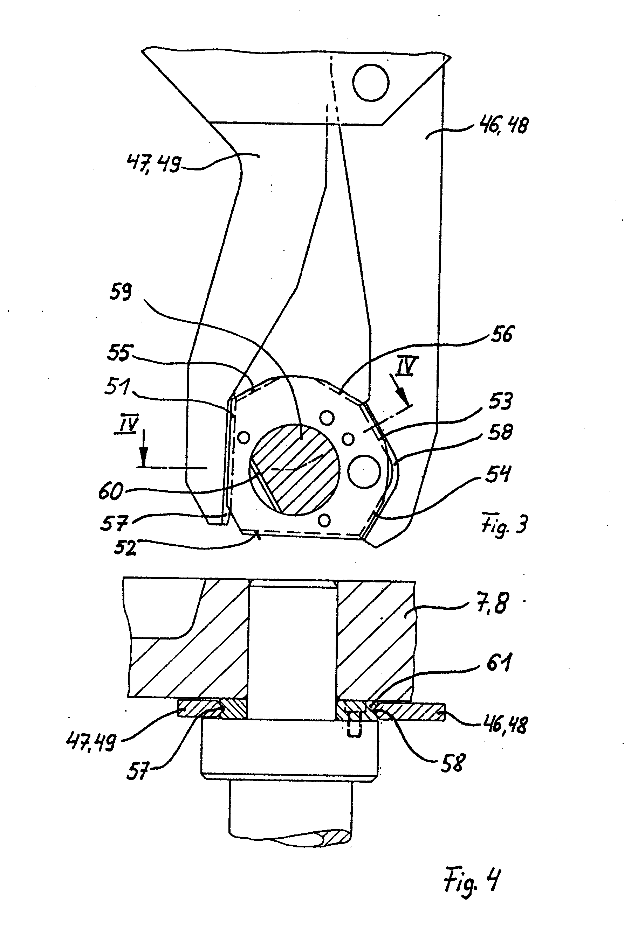

Fig. 3 zeigt die bereits erwähnten Spannflächen der Werkzeughalter 43,44,45 genauer. Sie bestehen aus zwei längeren , geraden, um 90 Grad versetzten V-förmigen Nuten 51,52, denen jeweils zwei kürzere, unter einem Winkel angeordnete,V-förmige Nuten 53,54 bzw. 55,56 gegenüberliegen. In die V-förmigen Nuten 51 - 56 greifen V-förmige Stege 57,58 der Spannfinger 46,47 bzw. 48.49 ein. Der Schnitt durch den Werkzeughalterschaft 59 zeigt die zur Einspannung in die Werkzeugrevolverscheibe 7,8 vorgesehene Verzahnung 60, die die Winkellage in Bezug zur Werkzeugrevolverscheibe 7,8 festlegt. Da die linken Spannfinger 47,49 nicht ausschwenken, sind die Stege 57 unter einem Winkel zur Senkrechten angeordnet.

Im Schnitt der Fig. 4 werden die V-förmigen Stege 57,58 der Spannfinger 46,47,48,49 sichtbar. Die zugehörigen V-förmigen Nuten 51,53 sind in einer Adapterplatte 61 angeordnet, die mit einem Werkzeughalter 43,44,45 verschraubt ist. Der Werkzeughalterschaft 59 sitzt in der Werkzeugaufnahme 42 einer Revolverscheibe 7,8.

Patentansprüche

1. Vorrichtung für das Einwechseln von Werkzeugen (27,28) in die Werkzeugaufnahmen (42) von zwei auf unabhängig in einer zur Horizontalen geneigten Ebene verfahrbaren Kreuzschlitten einer Werkzeugzeugmaschine angeordneten Werkzeugrevolvern (5,6), deren Werkzeugaufnahmen (42) parallel zur Werkstückspindelachse (11) der Werkzeugmaschine verlaufen, mit einer Werkstückhandhabungseinrichtung (2) mit einem in einer senkrechten, zur Werkstückspindelachse (11) parallelen Ebene verfahrbaren Werkstückgreifer, gekennzeichnet durch einen in die Werkstückhandhabungseinrichtung (2) einwechselbaren Werkzeuggreifer (21,22), mindestens je eine in die Bewegungsebene des Werkzeuggreifers (21,22) durch die Planschlitten (38,39) der Kreuzschlitten (40,41) verfahrbare Werkzeugaufnahme (42) der zwei Werkzeugrevolver (5,6) und durch die Bereitstellung der einzuwechselnden Werkzeuge (27,28) für den Werkzeuggreifer (21,22) in der in der Werkzeugaufnahme (42) jeweils zu spannenden Schneidenlage.

2. Vorrichtung nach Anspruch 1, dadurch gekennzeichnet, daß jeder Werkzeughalter (43,44,45) mindestens ein die Lage im Werkzeuggreifer (21,22) bestimmendes Element (51,52) auweist.

3. Vorrichtung nach Anspruch 1 und 2, dadurch gekennzeichnet, daß für die Greiffläche jedes Spannfingers (46,47) bzw. (48,49) des Werkzeuggreifers (21,22) zwei um 90 Grad versetzte, entsprechende Spannflächen (51,52, 53,54,55,56) am Werkzeughalter (43,44,45) des einzuwechselnden Werkzeugs (27,28) vorgesehen sind.

4. Vorrichtung nach Anspruch 1, dadurch gekennzeichnet, daß der Werkzeuggreifer (21,22) zwei Spannfinger (46, 47,48,49) mit im Querschnitt V-förmigen Greifflächen (57,58) aufweist, wobei die eine Greiffläche (57) gerade und die zweite Greiffläche (58) gekrümmt ist.

5. Vorrichtung nach Anspruch 4 dadurch gekennzeichnet, daß der erste Spannfinger (47,49) unbeweglich und der zweite Spannfinger (46,48) verschieblich ist, wobei die gerade Greiffläche (57) an dem unbeweglichen Greiffinger (47,49) angeordnet und gegenüber der Senkrechten um einen kleinen Winkel geneigt ist.

6. Vorrichtung nach Anspruch 1, dadurch gekennzeichnet, daß zur Bereitstellung der einzuwechselnden Werkzeuge (27,28) ein Werkzeugmagazin vorgesehen ist, in dem Werkzeuge (27) in einer ersten Schneidenlage und Werkzeuge (28) in einer zweiten Schneidenlage angeordnet sind.

7. Vorrichtung nach Anspruch 1 dadurch gekennzeichnet, daß zur Bereitstellung der einzuwechselnden Werkzeuge (27,28) je ein Werkzeugmagazin für die Aufnahme der Werkzeuge in einer ersten Schneidenlage für den Werkzeugwechsel in den ersten Werkzeugrevolver (5) und in einer zweiten Schneidenlage für den Werkzeugwechsel in den zweiten Werkzeugrevolver (6) vorgesehen ist.

Fig. 1

- 1/3 -

0215228

Fig.2

0215228

- 2/3 -

47,49

46,48

59

55

51

56

53

58

54

60

57

52

*Fig. 3*

7,8

61

47,49

46,48

57

58

*Fig. 4*